# EUROPÄISCHE PATENTSCHRIFT

(11) **EP 2 289 295 B1**
(45) Veröffentlichungstag und Bekanntmachung des Hinweises auf die Patenterteilung: **19.10.2016**
(21) Anmeldenummer: 10401136.6
(22) Anmeldetag: 12.08.2010
(51) Int. Cl.: A01B 49/06

(54) **Bestellkombination**
Combined agricultural device for soil cultivation and sowing
Dispositif combiné pour travailler le sol et semer

(30) Priorität: 20.08.2009 DE 102009043814; 27.10.2009 DE 102009044329
(43) Veröffentlichungstag der Anmeldung: 02.03.2011
(73) Patentinhaber: Amazonen-Werke H. Dreyer GmbH & Co. KG, 49205 Hasbergen (DE)
(72) Erfinder: Dutzi, Sven, 49525 Lengerich (DE); Tiessen, Reimer Uwe, 26135 Oldenburg (DE); Pelikan, Jean, 78150 le Chesnay (FR)

(56) Entgegenhaltungen:
- EP-A1- 2 055 164
- WO-A1-2005/115124
- WO-A2-2004/073381
- DE-U1- 9 214 242

## Beschreibung

Die Erfindung betrifft eine Bestellkombination gemäß des Oberbegriffes des Patentanspruches 1.

Eine derartige Bestellkombination ist in der WO 2004/07 33 81 A2 beschrieben.

Weitere Bestellkombinationen sind beispielsweise durch die DE 102 24 861 A1. Diese Bestellkombination ist an dem Dreipunktkraftheber eines Ackerschleppers angeordnet. Die Bestellkombination weist eine große Arbeitsbreite auf und besteht aus zwei an einem Zentralrahmen angeordneten Seiteneinheit die mit aus einer Arbeitsstellung in eine Transportstellung eingeklappt werden können. Damit auch Ackerschlepper mit geringer Hubkraft schwere Bestellkombinationen ausheben können und mit diesen sicher fahren können, ist bei dieser Bestellkombination vorgesehen, dass ein zusätzliches Stützrad mit einem weit nach hinten über die Bestellkombination hinausragende Tragarm angeordnet ist. Diese Ausgestaltung mit einem zusätzlichen Stützrad an einem separaten und langen Tragarm ist sehr aufwendig.

Der Erfindung liegt die Aufgabe zugrunde, die Anordnung und Ausgestaltung eines Transportstützelementes wesentlich zu vereinfachen.

Diese Aufgabe wird erfindungemäß durch die Merkmale des Kennzeichens des Anspruches 1 gelöst.

Somit können Schlepper mit geringer Hubkraft zum Ziehen der Bestellkombination eingesetzt werden. Hierdurch können ohne spezielle Laufräder eines Fahrwerkes trotzdem die Vorteile eines Fahrwerkes genutzt werden, indem das Mittelwalzenelement das Fahrwerkelement bildet. Auch dieses trägt zu einer kompakten Bauweise der Bestellkombination bei. Hierdurch wird ein gutes Fahrverhalten der Bestellkombination mit dem als Transportstützrad wirkenden Mittelwalzenelement in der Transportfahrt erreicht. Das Mittelwalzenelement ist schwenkbar aufgehängt und kann Lenkbewegungen des Schleppers folgen.

Bei Bestellkombinationen, deren Seitenrahmen einklappbar sind, ist vorgesehen, dass in der Mitte der Bestellkombination zwischen den den jeweiligen Seitenrahmen zugeordneten Nachlaufwalzen ein schmales Mittelwalzenelement an dem Tragrahmen angeordnet ist. Hierdurch ergibt sich eine vorteilhafte Ausgestaltung der Nachlaufwalze mit der Möglichkeit, das schmale Mittelwalzenelement als Fahrwerkselement zu nutzen, somit ist also das Mittelwalzenelement als Transportstützrad ausgestaltet.

In vorteilhafter Weise ist zur beweglichen Aufhängung des Mittelwalzenelementes vorgesehen, dass das Mittelwalzenelement mittels einer Pendelradaufhängung an dem Seitenrahmen angeordnet ist.

Um über das Mittelwalzenelement die Bestellkombination zumindest unterstützend ausbilden zu können, ist vorgesehen, dass das Mittelwalzenelement mittels einer motorischen Stellvorrichtung in Höhenrichtung gegenüber dem Tragrahmen verstellbar angeordnet ist.

Um während der Bestellarbeit eine gute Verdichtungsarbeit des Mittelwalzenelementes, welches als Transportstützrad dient und mittels einer Pendelradaufhängung aufgehängt ist, zu gewährleisten, ist vorgesehen, dass der Pendelradaufhängung eine Verriegelungseinrichtung zugeordnet ist, mittels welcher das Mittelwalzenelement in Arbeitsstellung der Seitenrahmen verriegelbar ist.

Weitere Einzelheiten der Erfindung sind der Beispielsbeschreibung und den Zeichnungen zu entnehmen.

### Hierbei zeigen

- Fig. 1: eine Bestellkombination mit größerer Arbeitsbreite mit zwei einklappbaren Seitenteilen und Düngerfronttank in Arbeitsstellung und perspektivischer Darstellung,
- Fig. 2: die Bestellkombination gemäß Fig. 1 in Transportstellung, in perspektivischer Darstellung,
- Fig. 3: die Bestellkombination gemäß Fig. 2 in Seitenansicht und
- Fig. 4: die Bestellkombination gemäß den Fig. 2 und 3 in der Ansicht von hinten.

Die Bestellkombination 101 weist einen Düngerbehälter 102 im Frontanbau an den Frontkraftheber 104 des Ackerschleppers 105 auf. Weiterhin weist das Bodenbearbeitungsgerät 103 einen zentralen Tragrahmen 106 auf, der über Kupplungselemente an den Dreipunktkraftheber des Ackerschleppers 105 angeordnet ist. An diesem zentralen Tragrahmen 106 sind die Seitenrahmen 107 des in zwei Teilbereichen 103' und 103" unterteilten Bodenbearbeitungsgerätes 103 schwenkbar angeordnet. An jedem Teilbereich 103' und 103" des Bodenbearbeitungsgerätes 103 ist ein Teilbereich 108' und 108" der Nachlaufwalze 108 angeordnet. Die Nachlaufwalze 108 weist die beabstandet zueinander angeordneten Walzenelementen 109 mit den zugeordneten Scharen 110 und 111 auf.

Die Nachlaufwalze 108 weist die beabstandet zueinander angeordneten reifenartigen Walzenelemente 109 und 109' auf, welche über Haltearme an dem Querbalken der Nachlaufwalze 108 befestigt sind.

Wie bereits erwähnt, sind die Walzenelemente der Nachlaufwalze 108 beabstandet zueinander angeordnet und weisen einen Zwischenraum zueinander auf. Die Walzenelemente 109 und 109' verfestigen den Boden streifenweise, so dass der Boden in Teilbereichen rückverfestigt wird.

Die Bestellkombination weist weiter eine Verteilmaschine auf. Diese Verteilmaschine ist im Ausführungsbeispiel als Einzelkornsämaschine mit dem Vereinzelungsorgan und Saatgutbehälter sowie einer Düngerverteilmaschine mit Düngervorratsbehälter 102 und zugeordneten Dosierorganen ausgestattet.

In dem Zwischenraum zwischen den Walzenelementen bzw. in Fahrtrichtung gesehen mit diesem Zwischenräume fluchtend sind die einzelnen Scharelemente und der Verteilmaschine angeordnet.

Die Säschare und die Düngerschare der Schareinheiten befinden sich in den nicht von den Walzenelementen 5 verfestigten Bereichen.

Der Querbalken, an dem sowohl die Walzenelemente wie auch die Säschare mittels ihrer Gelenkstreben und angeordnet sind, befindet sich vor den Walzenelementen.

Die Düngerschare befinden sich zumindest teilweise in dem Zwischenbereich zwischen den Walzenelementen. Weiterhin erstrecken sich die Gelenkstreben, die die Schare tragen, durch den Zwischenbereich zwischen den Walzenelementen. Den Säscharen sind jeweils Tiefenführungsräder zugeordnet. Diese Tiefenführungsräder erstrecken sich quer zur Fahrtrichtung gesehen zumindest annähernd über den Zwischenraum zwischen den einander benachbarten Walzenelementen, so dass sie den Zwischenbereich zwischen den Walzenelementen rückverfestigen und hier die Aufgabe der Walzenelemente der Nachlaufwalze übernehmen, so dass der gesamte Arbeitsbereich von den Walzenelementen in Verbindung mit den Tiefenführungsrädern rückverfestigt wird.

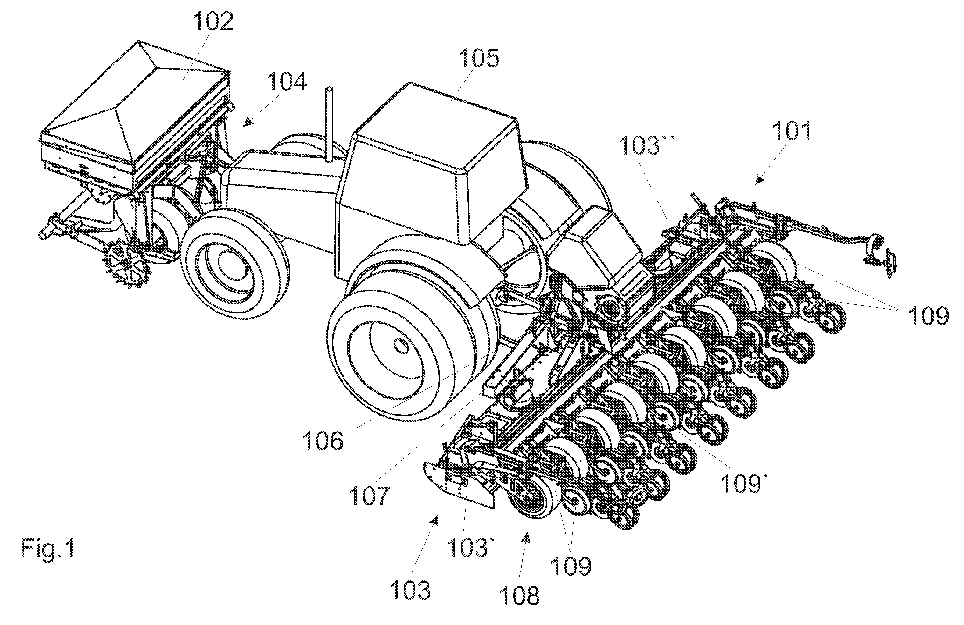

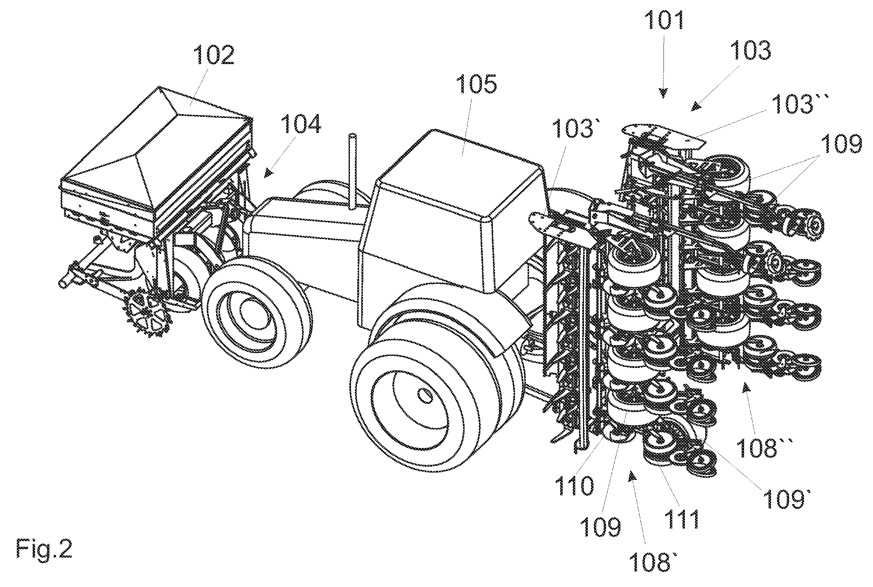

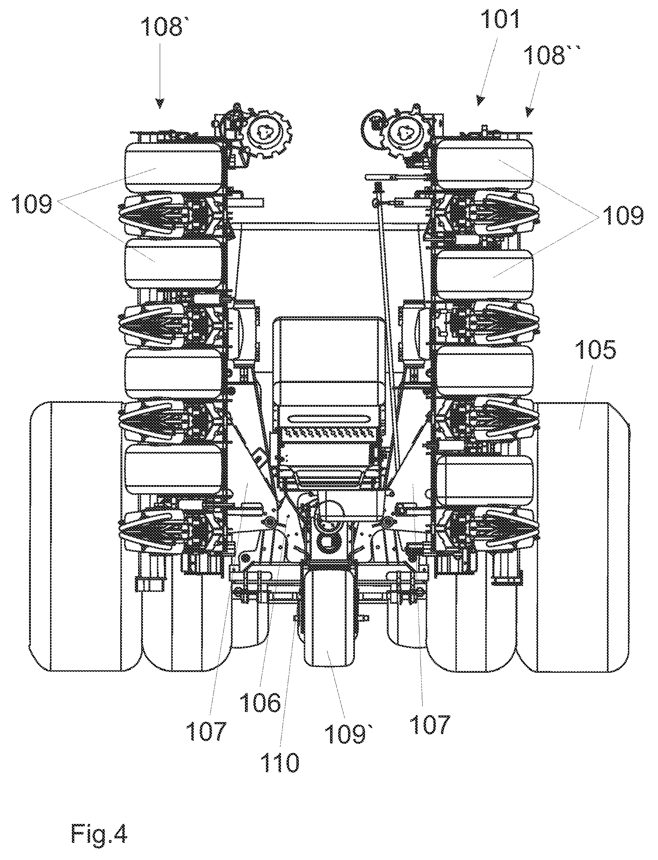

Die Bestellkombination 101, die in Fig. 1 in Arbeitsstellung dargestellt ist, ist in die in die Fig. 2 bis 4 dargestellte Transportstellung zu verschwenken. Hierbei weist die Bestellkombination 101 zwischen den den jeweiligen Seitenrahmen 107 zugeordneten Nachlaufwalzen 108' und 108" ein schmales Mittelwalzenelement 109' auf, wie insbesondere der Fig. 4 zu entnehmen ist. Dieses schmale Mittelwalzenelement 109' ist über eine separate Halterung 110 an dem Tragrahmen 106 befestigt. Während die anderen Walzenelemente 109 der Nachlaufwalze 108 an den Seitenrahmen 107 befestigt sind.

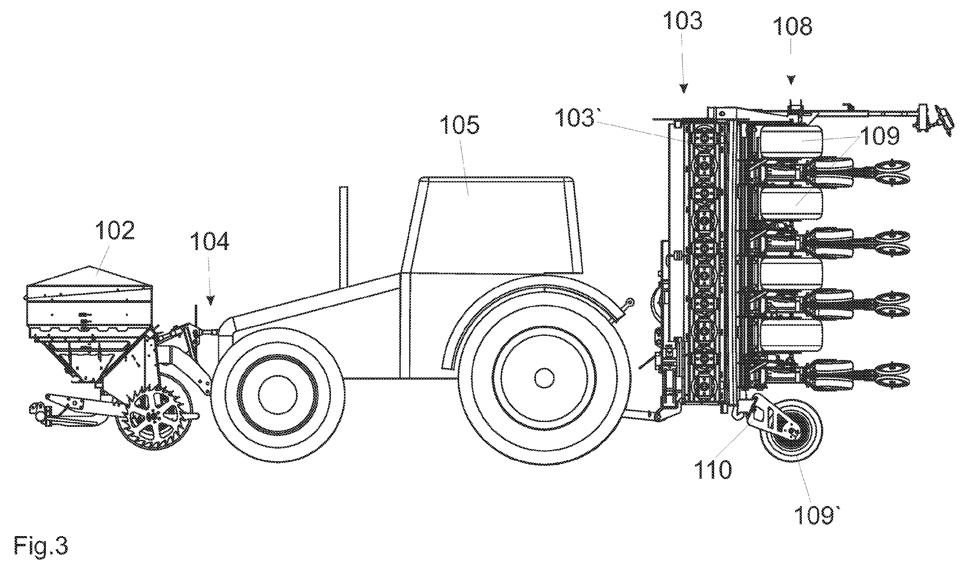

Das Mittelwalzenelement 109' ist in der Transportstellung der Bestellkombination 101 als Transportstützrad ausgebildet, wie insbesondere die Fig. 3 und 4 zeigen. Das Mittelwalzenelement 109' ist mit einer nicht im einzelnen dargestellten, eine aufrechte Schwenkachse aufweisenden Haltevorrichtung 110 an dem Tragrahmen 106 angeordnet und um diese Achse zumindest in eingeklappter Position der Seitenrahmen 107 gemäß den Fig. 2 bis 8 frei schwenkbar. Dieses Mittelwalzenelement 109', welches als Transportstützrad dient, stützt zusätzlich die Bestellkombination 101 gegenüber dem Boden ab, so dass das gesamte Gewicht der Bestellkombination 101 in ausgehobener Position nicht von dem Schlepper 105 bzw. von der Dreipunktkupplung getragen werden muss.

In nicht dargestellter Weise ist das Mittelwalzenelement109' mit der vorbeschriebenen Pendelausrüstung an dem Mittelrahmen 106 angeordnet. Das Mittelwalzenelement 109' ist mittels nicht dargestellter motorischer Stellvorrichtungen in Höhenrichtung gegenüber dem Tragrahmen 106 verstellbar angeordnet, so dass das Transportstützrad 109' in die entsprechende Position in der Transportstellung und in die Arbeitsstellung gebracht werden kann.

In nicht dargestellter Weise ist der Pendelradaufhängung eine Verriegelungseinrichtung zugeordnet, mittels welcher das Mittelwalzenelement 109' in Arbeitsstellung gegenüber dem Seitenrahmen 107 und Tragrahmen 106 verriegelbar ist.

## Patentansprüche

1. Bestellkombination bestehend aus einem Bodenbearbeitungsgerät mit an einem Tragrahmen ( 106 ) angeordneten Anlenkpunkten für den Anbau an ein Traktordreipunktgestänge, wobei an dem Tragrahmen ( 106 ) Seitenrahmen, ( 107 ) mit Bodenbearbeitungswerkzeugen und zugeordneten Nachlaufwalzen ( 108', 108'' ) angeordnet sind, wobei das Bodenbearbeitungsgerät aus mehreren Geräteeinheiten ( 103', 103'' ) besteht, die zusammen mit den Nachlaufwalzen um horizontale Achsen schwenkbar und einklappbar am Tragrahmen ausgebildet sind, wobei das Gerät aus vorzugsweise zwei unmittelbar nebeneinander angeordneten Bodenbearbeitungswerkzeugen tragenden Seitenrahmen ( 107 ) besteht, die jeweils zusammen mit den Nachlaufwalzen in eine Transportstellung einschwenkbar angeordnet sind, wobei in der Mitte der Bestellkombination ( 101 ) zwischen den den jeweiligen Seitenrahmen ( 107 ) zugeordneten Nachlaufwalzen (108', 108" ) ein schmales Mittelwalzenelement ( 109' ) an dem Tragrahmen ( 106 ) angeordnet ist, **dadurch gekennzeichnet, dass** das Mittelwalzenelement ( 109' ) mit einer eine aufrechte Schwenkachse aufweisenden Haltevorrichtung ( 110 ) an dem Tragrahmen ( 106 ) angeordnet und um diese Achse zumindest in eingeklappter Position der Seitenrahmen ( 107 ) frei schwenkbar ist.

2. Bestellkombination nach Anspruch 1, **dadurch gekennzeichnet, dass** das Mittelwalzenelement ( 109' ) als Transportstützrad ausgebildet ist.

3. Bestellkombination nach Anspruch 1, **dadurch gekennzeichnet, dass** das Mittelwalzenelement ( 109' ) mittels einer Pendelradaufhängung an dem Tragrahmen ( 106 ) angeordnet ist.

4. Bestellkombination nach einem oder mehreren der vorstehenden Ansprüche, **dadurch gekennzeichnet, dass** das Mittelwalzenelement ( 109' ) mittels einer motorischen Stellvorrichtung in Höhenrichtung gegenüber dem Tragrahmen ( 106 ) verstellbar angeordnet ist.

5. Bestellkombination nach einem oder mehreren der vorstehenden Ansprüche, **dadurch gekennzeichnet, dass** der Pendelradaufhängung eine Verriegelungseinrichtung zugeordnet ist, mittels welcher das Mittelwalzenelement in Arbeitsstellung der Seitenrahmen verriegelbar ist.

6. Bestellkombination nach Anspruch 1, wobei der Bestellkombination eine Sämaschine mit zumindest einem Vorratsbehälter, der oberhalb des Tragrahmens oder der Nachlaufwalzen angeordnet ist, zugeordnet ist, **dadurch gekennzeichnet, dass** in der eingeklappten Position der Seitenrahmen die Seitenrahmen den Vorratsbehälter dicht umschließen bzw. einfassen der zusammen mit der für den Anbau oder Aufbau vorgesehenen Sämaschine auf dem Tragrahmen angeordnet ist.

## Claims

1. Combined agricultural device consisting of a soil cultivation implement with articulation points, which are arranged on a supporting frame (106), for the attachment to a tractor three-point linkage, wherein side frames (107) with soil cultivation tools and assigned trailing rollers (108'), 108") are arranged on the supporting frame (106), wherein the soil cultivation implement consists of a plurality of implement units (103', 103") which are formed together with the trailing rollers so as to be pivotable about horizontal axes and to be retractable on the supporting frame, wherein the implement consists of preferably two side frames (107) which are arranged directly next to each other, carry soil cultivation tools and are in each case pivotable together with the trailing rollers into a transport position, wherein, in the centre of the combined agricultural device (101), a narrow central roller element (109') is arranged on the supporting frame (106) between the trailing rollers (108', 108") assigned to the respective side frames (107), **characterized in that** the central roller element (109') is arranged on the supporting frame (106) with a holding device (110), which has an upright pivot axis, and is freely pivotable about said axis, at least in the retracted position of the side frames (107).

2. Combined agricultural device according to Claim 1, **characterized in that** the central roller element (109') is designed as a transport support wheel.

3. Combined agricultural device according to Claim 1, **characterized in that** the central roller element (109') is arranged on the supporting frame (106) by means of a pendulum wheel suspension.

4. Combined agricultural device according to one or more of the preceding claims, **characterized in that** the central roller element (109') is arranged so as to be adjustable in the vertical direction in relation to the supporting frame (106) by means of a motorized adjustment device.

5. Combined agricultural device according to one or more of the preceding claims, **characterized in that** the oscillating wheel suspension is assigned a locking device by means of which the central roller element is lockable in the working position of the side frames.

6. Combined agricultural device according to Claim 1, wherein the combined agricultural device is assigned a sowing machine with at least one storage container which is arranged above the supporting frame or the trailing rollers, **characterized in that**, in the retracted position of the side frames, the side frames tightly surround or enclose the storage container which is arranged on the supporting frame together with the sowing machine, which is provided for attachment or mounting.

## Revendications

1. Dispositif agricole combiné composé d'un appareil pour travailler le sol doté de points articulés disposés au niveau d'un cadre porteur (106) pour le montage à une timonerie à trois points de tracteur, des cadres latéraux (107) dotés d'outils pour travailler le sol et de cylindres suiveurs (108', 108" ) associés étant disposés au niveau du cadre porteur (106), l'appareil pour travailler le sol se composant de plusieurs unités d'appareil (103', 103'') réalisées conjointement avec les cylindres suiveurs de façon à pouvoir pivoter autour des axes horizontaux et rabattables au niveau du cadre porteur, l'appareil se composant de préférence de deux cadres latéraux (107) supportant directement les outils pour travailler le sol disposés côte à côte et respectivement conjointement avec les cylindres suiveurs dans une position de transport de façon à pouvoir pivoter vers l'intérieur, un élément à cylindres médian (109') étroit étant disposé au niveau du cadre porteur (106), au centre du dispositif agricole combiné (101), entre les cylindres suiveurs (108', 108'') associés aux cadres latéraux (107) respectifs, **caractérisé en ce que** l'élément à cylindres médian (109') doté d'un dispositif d'arrêt (110) comportant un axe de pivotement droit est disposé au niveau du cadre porteur (106) et peut pivoter librement autour de cet axe au moins dans la position rabattue des cadres latéraux (107) .

2. Dispositif agricole combiné selon la revendication 1, **caractérisé en ce que** l'élément à cylindres médian (109') prend la forme d'une roue stabilisatrice pour le transport.

3. Dispositif agricole combiné selon la revendication 1, **caractérisé en ce que** l'élément à cylindres médian (109') est disposé au niveau du cadre porteur (106) à l'aide d'une suspension de roue pendulaire.

4. Dispositif agricole combiné selon l'une quelconque des revendications précédentes ou plusieurs d'entre elles, **caractérisé en ce que** l'élément à cylindres médian (109') est disposé de façon à pouvoir être déplacé dans la direction verticale par rapport au cadre porteur (106) au moyen d'un dispositif de placement motorisé.

5. Dispositif agricole combiné selon l'une quelconque des revendications précédentes ou plusieurs d'entre elles, **caractérisé en ce qu'**un dispositif de verrouillage est associé à la suspension de roue pendulaire, ledit dispositif servant à verrouiller l'élément à cylindres médian dans la position de travail des cadres latéraux.

6. Dispositif agricole combiné selon la revendication 1, une machine à semer dotée d'au moins un récipient de réserve disposé au-dessus du cadre porteur ou des cylindres suiveurs étant associée au dispositif agricole combiné, **caractérisé en ce que** les cadres latéraux entourent et/ou bordent de façon étanche le récipient de réserve dans la position rabattue des cadres latéraux, ledit réservoir étant disposé sur le cadre porteur conjointement avec la machine à semer prévue pour être montée en annexe ou en saillie.
